# EUROPEAN PATENT APPLICATION

(11) **EP 3 457 298 A1**
(43) Date of publication of application: **20.03.2019**
(21) Application number: 17191910.3
(22) Date of filing: 19.09.2017
(51) Int. Cl.: G06F 17/30

(54) **ELECTRONIC DEVICE AND A METHOD OF OPERATION**

(71) Applicant: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(57) **Abstract**

An electronic device (1) has a digital camera (4) and data storage (3). A digital media file captured with the digital camera (4) is stored in the data storage (3). A retention period for the digital media file is recorded in the data storage (3). The digital media file is deleted from the data storage (3) once the retention period for the digital media file has expired.

## Description

### Technical Field

The present disclosure relates to an electronic device and a method of operating an electronic device.

### Background

Many electronic devices have digital cameras which allow photographs and videos, etc. to be taken or captured by a user. The photographs and videos are typically stored in some data storage of the electronic device. However, the capacity of the data storage is inevitably limited and can rapidly fill. This is a growing problem. This is in part because the quality of photographs and videos that are captured continues to improve, for example because still and video images of increasingly higher resolution are captured as the digital camera technology improves, outpacing improvements in data storage technology and lowering of data storage technology costs. There is also a social trend to capture more images and videos, for sharing with friends and family, either directly or via one or more social media platforms. So-called "cloud" storage may be available for the user, but the capacity of the cloud storage allocated to a user is again inevitably limited.

### Summary

According to a first aspect disclosed herein, there is provided a method of operating an electronic device having a digital camera and data storage, the method comprising:
storing in the data storage a digital media file captured with the digital camera;
recording in the data storage a retention period for the digital media file; and
deleting the digital media file from the data storage once the retention period for the digital media file has expired.

In examples, this enables the media file to be deleted automatically once the retention period has expired. This avoids the user having to go through what can often be a very large number of media files stored in the data storage to manually delete media files one-by-one, for example to free up space in the data storage. The digital media file may be or correspond to for example a photograph or a video (which may contain also audio data) which is captured by the digital camera.

In an example, the method comprises receiving the retention period for the digital media file as an input by a user of the electronic device.

In an example, if no retention period is input by the user then no retention period is set for the digital media file. In such a case, the digital media file may be retained in the data storage until it is for example deleted manually by the user.

In an example, the input is received as a manual input by the user.

That is, the user may for example select a time period from a number of options or otherwise input a time period manually. The user may for example select from a number of options or enter a time period by freehand typing on a keyboard or other input of the electronic device, which may be for example a touchscreen of the electronic device.

In an example, the method comprises displaying a plurality of different retention periods for the digital media file on the electronic device to enable a user to select one of the displayed retention periods as the retention period that is recorded for the digital media file.

In an example, the electronic device has a plurality of image capture buttons for causing the digital camera to capture a digital media file, each capture button being associated with a different retention period, such that a digital media file captured using one of the capture buttons is associated with the corresponding retention period.

The capture buttons may for example be real, physical buttons or may be selectable icons that are displayed on for example a touch screen of the electronic device. The corresponding retention period may be displayed with or as part of the capture button.

In an example, the retention period is set automatically by the electronic device based on one or more of: a user's digit that was used to cause the electronic device to capture the image; the length of time that the user's digit was engaged with an image capture button of the camera when the image was captured; the pressure applied by the user's digit to an image capture button of the camera when the image was captured; and the camera of a plurality of cameras of the electronic device that was used to capture the image.

In an example, the input is received as an audio input by the user.

This has the advantage that the user does not have to interact physically with the electronic device, which may not be convenient or possible as the user may be taking a photograph or a video, etc. using the electronic device at that time.

In an example, the method comprises transmitting the digital media file to a remote server for storage prior to deleting the digital media file from the data storage.

That is, in essence, a back-up copy of the digital media file may be sent to a remote server, such as a "cloud-based" server, which is accessible by the user. In an example, the electronic device may only send digital media files that are about to be deleted from the electronic device. This minimises use by the user of the remote server storage, helping the user to avoid exceeding any data cap that may apply for that remote server storage.

According to a second aspect disclosed herein, there is provided an electronic device, the electronic device comprising:
a digital camera; and
data storage;
the electronic device being constructed and arranged to:
   store in the data storage a digital media file captured with the digital camera;
   record in the data storage a retention period for the digital media file; and
   delete the digital media file from the data storage once the retention period for the digital media file has expired.

In an example, the electronic device is configured to receive the retention period for the digital media file as an input by a user of the electronic device.

In an example, the electronic device is arranged to receive the input as a manual input by the user.

In an example, the electronic device comprises a display screen and is configured to display a plurality of different retention periods for the digital media file to enable a user to select one of the displayed retention periods as the retention period that is recorded for the digital media file.

In an example, the electronic device comprises a plurality of image capture buttons for causing the digital camera to capture a digital media file, each capture button being associated with a different retention period such that a digital media file captured using one of the capture buttons has the corresponding retention period stored in the data storage.

In an example, the electronic device comprises a microphone for receiving the input as an audio input by the user.

In an example, the electronic device is configured to set the retention period automatically based on one or more of: a user's digit that was used to cause the electronic device to capture the image; the length of time that the user's digit was engaged with an image capture button of the camera when the image was captured; the pressure applied by the user's digit to an image capture button of the camera when the image was captured; and the camera of a plurality of cameras of the electronic device that was used to capture the image.

In an example, the electronic device is configured to transmit the digital media file to a remote server for storage prior to deleting the digital media file from the data storage.

There may also be provided a computer program comprising instructions such that when the computer program is executed on electronic device, the electronic device is arranged to perform a method as described above.

### Brief Description of the Drawings

To assist understanding of the present disclosure and to show how embodiments may be put into effect, reference is made by way of example to the accompanying drawings in which:

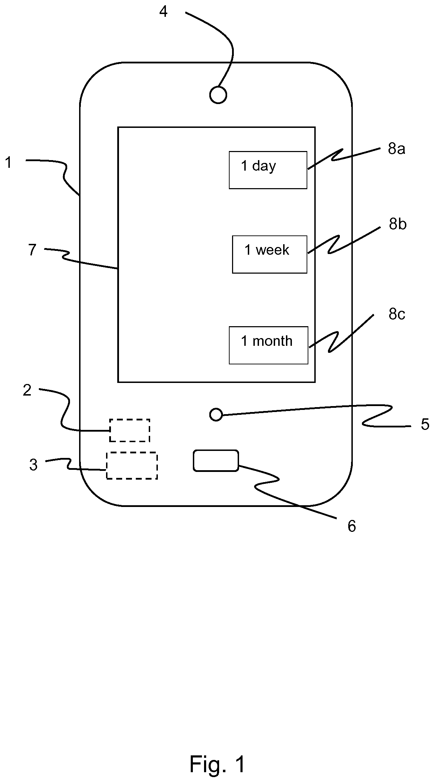

Figure 1 shows schematically an example of an electronic device.

### Detailed Description

Many electronic devices have digital cameras, which allow photographs and videos, etc. to be taken or captured by a user. Such devices include digital cameras themselves, smartphones, tablet computers, etc. The photograph, video, etc. is stored as a digital media file in data storage of the device. However, the data storage of the device often rapidly fills. This means that the user typically has to delete photographs, videos, etc. in order to free up storage space. This can be a tedious task if the user goes through each media file in turn to select which ones to delete. The only other sensible alternative is simply to delete all media files stored on the electronic device, which may not be acceptable or convenient for the user.

Accordingly, in examples described herein, a retention period for a digital media file is recorded, typically at or around the same time that the digital media file is captured with a digital camera. The digital media file is deleted from the data storage once the retention period for that file has expired. In an example, this effectively means that the user can define a lifetime for the media file, conveniently at the time that the media file is captured. This avoids the user having to worry about deleting media files manually later. This also enables the user to capture high resolution photographs and videos and avoids the user having to capture low resolution photographs and videos simply because of a concern over data storage capacity.

Referring to Figure 1, this shows schematically an example of an electronic device 1. The example shown is a smartphone, but other examples include any electronic device having a digital camera, including for example tablet computers, laptop computers and digital cameras themselves, which may be for taking still and/or video images.

The device 1 has one or more processors 2, data storage 3, etc. as is typical of such electronic devices. The device 1 has a digital camera 4, which is capable of taking or capturing digital photographs (still images) and/or digital videos (moving images, optionally also containing audio data). The captured image is stored in the data storage 3 in the form of a digital media file. The device 1 of this example also has a microphone 5, which enables audio input to the device 1. The device 1 may have one or more physical buttons 6 to enable input of commands to control the operation of the device 1. The device 1 also has a display screen 7, which may be a touchscreen in some examples.

The device 1 is configured, for example through appropriate software running on the processor 2 of the device 1, to record in the data storage 3 a retention period for a digital media file which is captured using the camera 4. The digital media file is deleted from the data storage 3 once the retention period for that digital media file has expired. Various examples and options for implementing this are described further below. In short, however, in examples this enables a user to select a lifetime for the digital media file, which may be for example 1 hour, 12 hours, 1 day, 3 days, 1 week, etc., etc. At the end of that retention period for that media file, the device 1 operates to delete the media file from the data storage 3. The user therefore does not need to be concerned with manually deleting the media file from the data storage 3.

As an option, the user may be provided with a visual warning on the display screen 7 that a media file is about to be deleted from the data storage 3 as the end of the retention period is reached. This may be provided with a selectable option to allow the user to override the proposed deletion of the media file so that the media file is not automatically deleted by the electronic device 1. The user may also be provided with an option to reset the retention period or to select a new retention period for that media file, which is then saved in the data storage 3 and associated with that media file.

In an example, the device 1 may be configured such that the retention period for a digital media file is received as an input by a user of the electronic device 1. The user may input the retention period for the digital media file at substantially the same time as capturing the photograph or video, the retention period then being saved in the data storage 3 and associated with that media file which is also stored in the data storage 3.

The input of the retention period for the media file may be via a manual input by the user.

For example, at or around the time that the user is capturing an image using the device 1, the user may input a retention period for the media file effectively by freehand typing on a keyboard or other input of the electronic device 1, such as a touchscreen 7 in the case of the device 1 being a smartphone, etc.

Alternatively or additionally, the electronic device 1 may be configured such that when a camera application is selected on the device 1 to enable photographs or videos to be captured, the device 1 may also present a number of options for retention periods on the display screen 7. This is indicated schematically in Figure 1 by the display of three icons 8a, 8b, 8c for retention periods of 1 day, 1 week and 1 month respectively. (Clearly, other options may be displayed, such as 1 hour, 3 days, etc.). The user is able to select one of the options 8a, 8b, 8c as the retention period for the digital media file corresponding to the image that is captured and that is to be saved in the data storage 3.

The retention period may be selected (just) prior to the image being captured. As an alternative, the device 1 may be configured such that the retention period can be selected by selecting one of the displayed options, 8a, 8b, 8c after the image has been captured. There may be a time-out in such a case, such that if the user does not select a retention period within a certain period of time following the capture of the media file, then a default retention period may be set for the media file. The default may be for example that the media file is not automatically deleted by the device 1 (i.e. no retention period is specified for the file or the retention period is effectively infinite, and it is left to the user to manually delete that media file later if they choose).

Alternatively or additionally, the electronic device 1 may be configured such that the user is able to select specific retention periods for all images that are contained in a specific folder in the data storage 3 of the electronic device 1. Such a folder may be a "gallery" folder for all images. There may be sub-folders which may be for images captured or obtained using different applications on the electronic device 1 or which may have been manually created by the user to organise the storage of the images, and different retention periods may be set by the user for each different sub-folder.

Alternatively or additionally, the electronic device 1 may have a plurality of image capture buttons for causing the digital camera 4 to capture a digital media file, in which each capture button is associated with a different retention period. This is again indicated schematically by the icons 8a, 8b, 8c in Figure 1 which, in this example, are image capture buttons with different associated retention periods. As an alternative, the electronic device 1 may have a number of physical capture buttons, which may be marked with default retention periods. There may be for example one physical capture button at the front of the electronic device 1 for one retention period and a second physical capture button at the rear of the electronic device 1 for another retention period. In any event, the user may effectively select a retention period for a media file by using the corresponding capture button to capture the image. (In all cases, again, one of the soft or hard capture buttons may be such as to set no retention period or equivalently an infinite retention period.)

Alternatively or additionally, the electronic device 1 may be configured to recognise that a particular digit (i.e. thumb or finger, or a particular finger) was used to activate the image capture button to capture the image and to set a corresponding retention period. For example, the electronic device 1 may have a touch ID (identifier) function by which the electronic device 1 can recognise a particular digit from the fingerprint pattern of the digit used to activate the image capture button. In such a case, the user will configure the electronic device 1 by capturing fingerprints for one or more of the user's digits with the electronic device 1 and also entering associated retention periods for each digit during a set-up phase for the electronic device 1. Alternatively or additionally, the electronic device 1 may have a touch sensor associated with the image capture button which detects the pressure that was applied to activate the image capture button. In such a case, the user will configure the electronic device 1 by activating the image capture button using different digits and the electronic device 1 records the pressure applied using the different digits during a set-up phase for the electronic device 1.

In such examples, the electronic device 1 may have a functionality that enables the user to freely set retention periods for each digit and/or the electronic device 1 may have a number of preset retention periods for each digit which the user can select. As one example only to illustrate this, the electronic device 1 may be configured such that if an image is captured using a thumb, then no retention period or equivalently an infinite retention period is set; if an image is captured using some other digit, or a specific digit such as the forefinger (first finger), then a retention period of 1 day is set; if an image is captured using the middle (second) finger, then a retention period of 3 days is set, etc., etc.

In another variant of such examples, the electronic device 1 may be configured to note retention periods that were manually set by the user when a specific digit (e.g. the thumb, forefinger, etc.) was used to capture the image and then to set a default retention period for that digit. A threshold may be set for this such that, for example, if a user uses a thumb to activate the image capture button and sets no retention period or equivalently an infinite retention period say at least 75% or 90% of the time, etc., ,then that becomes the default for that digit. As another variant of this, the electronic device 1 may be configured to note if a particular digit is most commonly used to capture images and to automatically set a specific retention period (or no retention period) whenever that digit is used. There may again be a threshold for this. For example, the electronic device 1 may be configured to note that say the thumb is used for more than say 75% or 90%, etc. of the time and sets no retention period (i.e. the image is not deleted automatically) for images captured using the thumb and sets a specific retention period for images captured using a different digit.

Alternatively or additionally, the electronic device 1 may be configured to note that time that the user's digit was engaged with the image capture button and to set associated retention periods automatically. For example, if the user's digit was engaged with the image capture button for more than a second say, then a long retention period or no retention period is set, whereas if the user's digit was engaged with the image capture button for less than a second say, then a short retention period may be set.

Alternatively or additionally, the user may input a retention period for a media file that is about to be captured or that has just been captured as an audio input via the microphone 5. The software running on the processor 2 of the electronic device 1 may analyse the speech that is input to obtain the desired input for the retention period for that media file, which is then saved in the data storage 3 and associated with that media file. An advantage of this is that the user does not have to interact physically with the electronic device 1, which may not be convenient or possible as the user may be taking a photograph or a video, etc. using the electronic device 1 at that time.

In another example, the electronic device 1 may have plural cameras 4 and may be configured such that images taken with the different cameras 4 have different retention periods set automatically by the electronic device 1. As one example to illustrate this, the electronic device 1 may have a front camera and a rear camera, and no retention period is automatically set by the electronic device 1 for images taken with the front camera such that such images are not automatically deleted, and a specific retention period (of e.g. 1 day, 3 days, etc.) is set for images taken with the rear camera such that such images are automatically deleted at the end of the retention period. (The rationale for this might be that for example images captured with the rear camera may be so-called "selfies", which are not so important for the user and are likely to be of transient interest, whereas images captured with the front camera may be of more value to the user.)

In an example, the electronic device 1 may be arranged so as to transmit the digital media file (i.e. a copy of the media file) to a remote server for storage prior to deleting the digital media file from the data storage 3. The remote server may provide so-called "cloud" storage for the user. In this example, effectively a back-up copy of the digital media file may be sent to the remote server, which is accessible by the user. In an example, the electronic device 1 may be arranged only to send to the remote server digital media files that are about to be deleted from the electronic device 1. This minimises use by the user of the remote server storage, which helps the user to avoid exceeding any data cap that may apply for that remote server storage. The sending of media files that are about to be deleted from the data storage 3 by the electronic device 1 may be a user option, which the user can select as a default for example. In another example, the user may be provided with a visual warning on the display screen 7 that a media file is about to be deleted from the data storage 3 as the end of the retention period is reached, and a selectable option to send a copy of the media file the remoter server.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating an electronic device having a digital camera and data storage, the method comprising:
storing in the data storage a digital media file captured with the digital camera;
recording in the data storage a retention period for the digital media file; and
deleting the digital media file from the data storage once the retention period for the digital media file has expired.

2. A method according to claim 1, comprising receiving the retention period for the digital media file as an input by a user of the electronic device.

3. A method according to claim 2, wherein the input is received as a manual input by the user.

4. A method according to claim 2 or claim 3, comprising displaying a plurality of different retention periods for the digital media file on the electronic device to enable a user to select one of the displayed retention periods as the retention period that is recorded for the digital media file.

5. A method according to any of claims 2 to 4, wherein the electronic device has a plurality of image capture buttons for causing the digital camera to capture a digital media file, each capture button being associated with a different retention period, such that a digital media file captured using one of the capture buttons is associated with the corresponding retention period.

6. A method according to any of claims 2 to 5, wherein the input is received as an audio input by the user.

7. A method according to any of claims 1 to 6, wherein the retention period is set automatically by the electronic device based on one or more of: a user's digit that was used to cause the electronic device to capture the image; the length of time that the user's digit was engaged with an image capture button of the camera when the image was captured; the pressure applied by the user's digit to an image capture button of the camera when the image was captured; and the camera of a plurality of cameras of the electronic device that was used to capture the image.

8. A method according to any of claims 1 to 7, comprising transmitting the digital media file to a remote server for storage prior to deleting the digital media file from the data storage.

9. An electronic device, the electronic device comprising:
a digital camera; and
data storage;
the electronic device being constructed and arranged to:
store in the data storage a digital media file captured with the digital camera;
record in the data storage a retention period for the digital media file; and
delete the digital media file from the data storage once the retention period for the digital media file has expired.

10. An electronic device according to claim 9, the electronic device being configured to receive the retention period for the digital media file as an input by a user of the electronic device.

11. An electronic device according to claim 10, comprising a display screen and being configured to display a plurality of different retention periods for the digital media file to enable a user to select one of the displayed retention periods as the retention period that is recorded for the digital media file.

12. An electronic device according to claim 10 or claim 11, comprising a plurality of image capture buttons for causing the digital camera to capture a digital media file, each capture button being associated with a different retention period such that a digital media file captured using one of the capture buttons has the corresponding retention period stored in the data storage.

13. An electronic device according to any of claims 9 to 12, the electronic device being configured to set the retention period automatically based on one or more of: a user's digit that was used to cause the electronic device to capture the image; the length of time that the user's digit was engaged with an image capture button of the camera when the image was captured; the pressure applied by the user's digit to an image capture button of the camera when the image was captured; and the camera of a plurality of cameras of the electronic device that was used to capture the image.

14. An electronic device according to any of claims 9 to 13, the electronic device being configured to transmit the digital media file to a remote server for storage prior to deleting the digital media file from the data storage.

15. A computer program comprising instructions such that when the computer program is executed on electronic device, the electronic device is arranged to perform a method according to any of claims 1 to 8.
